# EUROPÄISCHE PATENTSCHRIFT

(11) **EP 2 506 386 B1**
(45) Veröffentlichungstag und Bekanntmachung des Hinweises auf die Patenterteilung: **14.05.2014**
(21) Anmeldenummer: 11160357.7
(22) Anmeldetag: 30.03.2011
(51) Int. Cl.: H02J 7/00, H04M 19/08

(54) **System zum Aufladen von tragbaren elektronischen Geräten**
System for charging portable electronic devices
Système de chargement d'appareils électroniques portatifs

(43) Veröffentlichungstag der Anmeldung: 03.10.2012
(73) Patentinhaber: Quipos Solutions GmbH, 5071 Wals-Siezenheim (AT)
(72) Erfinder: Karpf, Karl-Heinz, 5232 Kirchberg (AT); Aigner, Roland, 5400 Hallein/Rif (AT); Kopplinger, Richard, 5020 Salzburg (AT); Bubestinger, Michael, 5020 Salzburg (AT)
(74) Vertreter: Karakatsanis, Georgios

(56) Entgegenhaltungen:
- EP-A1- 1 487 082
- EP-A1- 2 015 389
- DE-B- 1 134 756
- JP-A- 2004 248 733
- US-A- 4 591 777
- US-A- 5 900 715

## Beschreibung

Die vorliegende Erfindung bezieht sich auf ein System zum Aufladen von tragbaren elektronischen Geräten gemäß dem Oberbegriff des Patentanspruchs 1.

Aus dem Stand der Technik ist bekannt, tragbare elektronische Geräte mittels spezieller Ladekabel oder über Ladeschalen, welche an einen Strom- oder USB-Anschluss anschließbar sind, aufzuladen. Für den Fall, dass mehrere tragbare elektronische Geräte aufgeladen werden sollen, wie dies beispielsweise bei tragbaren Geräten von Funkboniersystemen für die Gastronomie oder bei tragbaren Geräten von Point-of-Sales-oder Zutrittskontrollsystemen bei Großveranstaltungen der Fall ist, resultiert das gleichzeitige Aufladen oft in einem sogenannten "Kabelsalat", da jedem Gerät eine Ladeschale mit entsprechenden Stromkabeln zugeordnet ist. Ferner wird dieses Problem aufgrund der Tragegurte der Mobilteile verschärft, so dass es den Benutzern derartiger Geräte erschwert wird, diese Geräte aufzuladen oder aus der entsprechenden Ladeschale zu entnehmen.

Des Weiteren ist zum Aufladen mehrerer tragbarerer elektronischer Geräte eine Mehrzahl von Ladeschalen erforderlich, die wiederum entsprechend viel Platz benötigen, auch wenn die Mobilteile nicht aufgeladen werden.

Aus der JP 2004248733 A beschreibt ein System zur Datenübertragung zwischen einem mobilen Gerät und einer Funktionseinheit, welche dem mobilen Gerät zugeordnet ist und in eine Trageschlaufe des mobilen Gerätes integriert ist, wobei die Trageschlaufe mittels eines herkömmlichen elektrischen Steckers mit einer herkömmlichen Steckdose elektrisch verbindbar ist, wodurch die Batterie des mobilen Gerätes aufgeladen werden kann.

Im Rahmen der US 4 591 777 A ist ein modulares Ladesystem mit mehreren Stationen für drahtlose Geräte beschrieben, wobei mehrere Geräte, insbesondere Haushaltsgeräte dadurch aufgeladen werden, dass der speziell ausgeführte Griff der Geräte mit speziell ausgeführten Kontakten einer an das Stromnetz angeschlossenen Haltevorrichtung verbunden werden.

Aus der EP 2 015 389 A1 geht eine Vorrichtung hervor, mit einem elektrischen Gerät, welches mit austauschbaren und wiederaufladbaren Batterien betrieben wird, mit einer Ladestation und mit zwei oder mehr Batterieeinheiten, wobei die Ladestation zwei oder mehr Aufnahmen zum Halten und Laden der Batterieeinheiten aufweist und wobei erste Verbindungsmittel zwischen je einer Batterieeinheit und dem Gerät und zweite Verbindungsmittel zwischen je einer Batterieeinheit und der Ladestation vorgesehen sind, derart, dass eine mit dem Gerät verbundene Batterieeinheit durch einhändige Bedienung vom Gerät abkoppelbar und zum Laden an die Ladestation ankoppelbar ist und/oder derart, dass eine mit der Ladestation verbundene Batterieeinheit durch einhändige Bedienung an das Gerät ankoppelbar und von der Ladestation abkoppelbar ist.

Die EP 1487 082 A1 beschreibt ein induktives Ladesystem für eine tragbare elektronische Vorrichtung. Ferner geht aus der DE 11 34 756 B eine elektrische Taschenleuchte oder ein entsprechend aufgebautes Kleingerät mit Sammler und Ladeeinrichtung hervor, wobei die Leuchte während des Ladens eingeschaltet und der Sammler mit Hilfe eines in Ruhestellung in das Gerät einsteckbaren und lediglich über ein Kabel mit dem Gerät verbundenen Netzsteckers aufgeladen werden kann. Hierbei ist steckerseitig ein Hohlraum vorhanden, der zum Aufbewahren des Kabels zwischen Netzstecker und Gerätegehäuse dient. Der Hohlraum kann sowohl ein Kabel, das länger als das Gerät ist, als auch den Netzstecker selbst aufnehmen, wobei der Netzstecker von der Wandung des Hohlraumes so geführt ist, dass er beim Laden mit den Steckerstiften nach außen, das ganze Gerät tragen kann und für den Gebrauch der Leuchte oder des Gerätes frei vom Netz mit den Steckerstiften nach innen, den Hohlraum vollständig nach außen abschließt.

Aus der US 5 900 715 A geht eine schienenförmige Aufladevorrichtung für mehrere Geräte hervor, wobei die Geräte mit der Vorrichtung mittels magnetischer Kraft verbunden werden.

Insbesondere in der Gastronomie oder bei Point-of-Sales- oder Zutrittskontrollsystemen bei Großveranstaltungen, wo eine Mehrzahl von Mobilteilen erforderlich ist, ist der zur Verfügung stehende Platz zum Aufladen dieser Geräte in der Regel begrenzt. Dieser Raum steht zudem für weitere Funktionen bzw. Aktivitäten nicht zur Verfügung.

Ein weiteres aus dem Stand der Technik bekanntes Problem ist die Tatsache, dass bei tragbaren elektronischen Geräten, die in einer Tasche untergebracht sind, diese zum Aufladen aus der Tasche entfernt werden müssen, was sich oft als umständlich erweist.

Der vorliegenden Erfindung liegt die Aufgabe zugrunde, ein System zum Aufladen von tragbaren elektronischen Geräten anzugeben, durch dessen Verwendung der zum Aufladen erforderliche Platz reduziert wird und ein sogenannter "Kabelsalat" vermieden wird. Des Weiteren sollen bei den tragbaren Geräten keine zusätzlichen Bauteile erforderlich sein.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein System zum Aufladen von tragbaren elektronischen Geräten vorgeschlagen, welches eine mit einer Stromquelle elektrisch verbindbare Vorrichtung zum Aufhängen der tragbaren elektronischen Geräte und ein Teil zum Tragen des elektronischen Gerätes umfasst, welches mit dem elektronischen Gerät elektrisch verbindbar ist.

Gemäß der Erfindung weist das Teil zum Tragen des elektronischen Gerätes Mittel zur Übertragung elektrischer Energie, die mit dem elektronischen Gerät elektrisch verbindbar sind und mit den Mitteln zur Übertragung elektrischer Energie verbundene elektrische Kontaktmittel auf, welche durch Aufhängen des elektronischen Gerätes mittels des Teils zum Tragen des elektronischen Gerätes an der Vorrichtung zum Aufhängen der tragbaren elektronischen Geräte mit elektrischen Kontaktmitteln der Vorrichtung zum Aufhängen der tragbaren elektronischen Geräte lösbar elektrisch verbindbar sind. Vorzugsweise wird die lösbare elektrische Verbindung durch Formschluss hergestellt.

Hierbei ist vorzugsweise vorgesehen, dass als Mittel zur Übertragung elektrischer Energie in das Teil zum Tragen des elektronischen Gerätes ein Band aus elektrisch leitendem Gewebe oder ein Kabel integriert bzw. eingebettet ist, welches mit den elektrischen Kontaktmitteln des Teils zum Tragen des elektronischen Gerätes elektrisch verbunden ist. Das Band bzw. das Kabel sind auch mit dem elektronischen Gerät elektrisch verbindbar.

Das Teil zum Tragen des elektronischen Gerätes kann beispielsweise ein Tragegurt oder ein Tragegürtel sein. Das elektronische Gerät kann mit dem Tragegurt bzw. mit dem Tragegürtel direkt verbindbar sein oder es kann mit einer Tasche bzw. mit einer Hülle zum Unterbringen des Gerätes elektrisch verbindbar sein, die wiederum mit dem erfindungsgemäß ausgeführten Tragegurt bzw. Tragegürtel elektrisch verbindbar ist. Das Aufladen des elektronischen Gerätes kann für den Fall, dass eine Tasche oder Hülle mit dem Tragegurt bzw. Tragegürtel elektrisch verbindbar ausgeführt ist auch mittels Induktion erfolgen, so dass die Notwendigkeit von zusätzlichen Kabeln und Steckern zwischen der Tasche bzw. der Hülle und dem elektronischen Gerät entfällt.

Im Rahmen einer Weiterbildung der Erfindung kann vorgesehen sein, dass in das Teil zum Tragen des elektronischen Gerätes, z.B. in den Tragegurt bzw. in den Tragegürtel oder in die mit dem Tragegurt verbundene Tasche oder Hülle elektrische Energiespeicher integriert sind, die der Stromversorgung des elektronischen Gerätes dienen können und mit den Mitteln zur Übertragung elektrischer Energie verbunden sind.

Des Weiteren kann gemäß einer bevorzugten Ausführungsform der Erfindung vorgesehen sein, dass durch das Aufhängen des Gerätes an der Vorrichtung zum Aufhängen der tragbaren elektronischen Geräte zusätzlich zur elektrischen Verbindung auch eine Datenverbindung herstellbar ist, wodurch beispielsweise eine Datensynchronisierung bzw. eine Datenübertragung vom elektronischen Gerät zu einem weiteren elektronischen Gerät, beispielsweise zu einem Computer bzw. Server, und umgekehrt durchgeführt werden kann. In diesem Fall dient die Vorrichtung zum Aufhängen der tragbaren elektronischen Geräte als eine Art "docking station".

Zu diesem Zweck weist das Teil zum Tragen des elektronischen Gerätes Mittel zur digitalen Datenübertragung auf, die mit dem elektronischen Gerät zum Zweck der Datenübertragung verbindbar sind. Ferner weist das Teil zum Tragen des elektronischen Gerätes mit den Mitteln zur digitalen Datenübertragung verbundene Kontaktmittel auf, die durch Aufhängen des elektronischen Gerätes mittels des Teils zum Tragen des elektronischen Gerätes an der Vorrichtung zum Aufhängen der tragbaren elektronischen Geräte mit in der Vorrichtung zum Aufhängen der tragbaren elektronischen Geräte vorgesehenen Kontaktmitteln zur digitalen Datenübertragung lösbar verbindbar sind, so dass eine Datensynchronisierung bzw. eine Datenübertragung vom elektronischen Gerät zu einem mit der Vorrichtung zum Aufhängen der tragbaren elektronischen Geräte verbundenen weiteren elektronischen Gerät und umgekehrt ermöglicht wird.

In vorteilhafter Weise können die elektrischen Kontaktmittel der Vorrichtung zum Aufhängen der tragbaren elektronischen Geräte und des Teils zum Tragen des elektronischen Gerätes auch als Kontaktmittel zur digitalen Datenübertragung dienen, wobei die im Teil zum Tragen des elektrischen Gerätes vorgesehenen Mittel zur Übertragung elektrischer Energie auch der digitalen Datenübertragung dienen. Beispielsweise können das Aufladen des elektronischen Gerätes und die digitale Datenübertragung basierend auf USB-Standards erfolgen.

Die Vorrichtung zum Aufhängen der tragbaren elektronischen Geräte umfasst vorzugsweise mindestens einen mit einer Stromschiene verbundenen Haken, der elektrische Kontaktmittel aufweist. Wie bereits erläutert, können die Haken auch Kontaktmittel zur Datenübertragung aufweisen. Hierbei sind die elektrischen Kontaktmittel der Haken und des Teils zum Tragen des elektronischen Gerätes vorzugsweise derart ausgeführt, dass beim Aufhängen des elektronischen Gerätes eine elektrische Verbindung zwischen den Kontaktmitteln des Teils zum Tragen des elektronischen Gerätes und der Vorrichtung zum Aufhängen der tragbaren elektronischen Geräte durch Formschluss entsteht.

Um die Stabilität der elektrischen Verbindung zu erhöhen, kann im Rahmen einer Weiterbildung der Erfindung vorgesehen sein, dass die Haken als Verschlusshaken ausgeführt sind, wodurch bei aufgehängtem elektronischen Gerät das Teil zum Tragen des Gerätes sicher gehalten wird. Der Verschlusshaken kann zur Erhöhung der Sicherheit mit einem Schloss versehen sein. Das Schloss kann als herkömmliches Schloss oder als Code-Schloss ausgeführt sein. Für den Fall, dass das elektrische Gerät ohne das Schloss aufzusperren entfernt wird, kann vorgesehen sein, dass das elektronische Gerät softwaregesteuert deaktiviert bzw. gesperrt wird.

Im Rahmen einer weiteren Ausgestaltung der Erfindung kann vorgesehen sein, dass mittels des Entnehmens bzw. des Aufhängens des elektronischen Gerätes eine Zeiterfassung durchgeführt wird. Beispielsweise kann die Zeit als Arbeitszeit erfasst werden, in der das elektronische Gerät nicht an einem Haken der Vorrichtung hängt. Um den jeweiligen Benutzer des elektronischen Gerätes identifizieren zu können, ist in diesem Fall die Eingabe eines einen Benutzer eindeutig identifizierenden Codes oder Passwortes erforderlich.

Als tragbares Gerät im Sinne der Erfindung kann auch ein Mobiltelefon oder ein kleiner portabler Computer angesehen werden.

Ferner kann als Teil zum Tragen eines elektronischen Gerätes ein Kleidungsstück, beispielsweise eine Jacke, dienen. Wie bereits erläutert, können in das Kleidungsstück bzw. in die Jacke Mittel zur Übertragung elektrischer Energie, beispielsweise in Form eines Bandes aus leitendem Gewebe integriert sein, welche mit elektrischen Kontaktmitteln, die beispielsweise im Kragen der Jacke vorgesehen sein können, elektrisch verbunden sind, wobei das Kleidungsstück mit dem im Kleidungsstück getragenen elektronischen Gerät elektrisch verbindbar ist. Das Aufladen des elektronischen Gerätes kann hierbei auch mittels Induktion erfolgen, so dass die Notwendigkeit von zusätzlichen Kabeln und Steckern entfällt.

Zum Aufladen des im Kleidungsstück getragenen elektronischen Gerätes, beispielsweise eines Mobiltelefons und/oder für den Fall einer zusätzlich ermöglichten digitalen Datenübertragung gemäß den vorherigen Ausführungen kann das Kleidungsstück an eine gemäß der Erfindung ausgeführte Vorrichtung zum Aufhängen der tragbaren elektronischen Geräte aufgehängt werden, derart, dass eine elektrische Verbindung zwischen den im Kleidungsstück vorgesehenen Kontaktmitteln und den in der Vorrichtung zum Aufhängen der tragbaren elektronischen Geräte vorgesehenen Kontaktmitteln hergestellt wird.

Ferner kann gemäß der Erfindung ein in einer Notebook-Tasche angeordnetes Notebook durch Aufhängen an einen gemäß der Erfindung ausgeführten Haken aufgeladen werden, wobei in diesem Fall ja nach gewünschter Ausgestaltung auch ein Datenaustausch bzw. eine Synchronisierung des Notebooks durchgeführt werden kann.

Die Vorrichtung zum Aufhängen der elektronischen Geräte kann ferner fest installiert oder als tragbare Hakenleiste ausgeführt sein.

Die Vorrichtung zum Aufhängen der elektronischen Geräte kann auch als Schiene ausgeführt sein, welche mehrere Geräte gleichzeitig aufnehmen kann. Im Rahmen einer weiteren Ausgestaltung der Erfindung können die elektronischen Geräte eine Ausnehmung aufweisen, die als Teil zum Tragen des Gerätes dient, mittels der das elektronische Gerät an einen Haken oder an einer Schiene aufgehängt werden kann.

Ferner kann die Vorrichtung zum Aufhängen der elektronischen Geräte Mittel aufweisen, durch die ein freier Platz zum Aufladen eines Gerätes optisch angezeigt wird. Dies kann beispielsweise durch Leuchten einer grünen LED-Lampe signalisiert werden.

Durch die erfindungsgemäße Konzeption wird ein platzsparendes Aufladen von elektronischen Geräten ermöglicht, welches zudem Sicherheitsaspekten genügen kann. In vorteilhafter Weise können auch elektronische Geräte aufgeladen und/oder synchronisiert werden, ohne die ohnehin vorhandenen Teile zum Tragen der Geräte entfernen zu müssen. Vielmehr werden die Teile zum Tragen der Geräte, wie beispielsweise Tragegurte, Tragetaschen und Tragegürtel in das erfindungsgemäße System integriert.

Die Erfindung wird im Folgenden anhand der beigefügten Figuren beispielhaft näher erläutert. Es zeigen:
- Fig. 1: eine schematische perspektivische Ansicht einer ersten Ausführungsform der Erfindung zur Veranschaulichung des der Erfindung zugrunde liegenden Prinzips; und
- Fig. 2: eine schematische Ansicht der elektrischen Kontaktierung gemäß einer weiteren Ausführungsform der Erfindung.

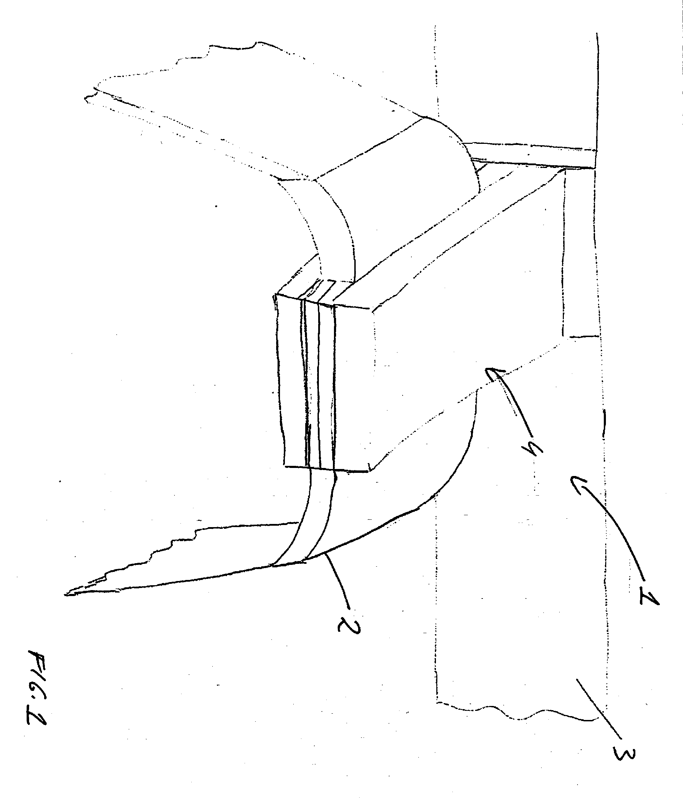

Bezugnehmend auf Figur 1, umfasst das erfindungsgemäße System zum Aufladen von tragbaren elektronischen Geräten eine mit einer Stromquelle elektrisch verbindbare Vorrichtung 1 zum Aufhängen der tragbaren elektronischen Geräte und ein Teil 2 zum Tragen des elektronischen Gerätes, welches mit dem in der Figur nicht dargestellten Gerät elektrisch verbindbar ist.

Hierbei weist das Teil 2 zum Tragen des tragbaren elektronischen Gerätes elektrische Kontaktmittel auf, welche durch Aufhängen des Gerätes mittels des Teils 2 zum Tragen des Gerätes an der Vorrichtung 1 zum Aufhängen der tragbaren elektronischen Geräte mit elektrischen Kontaktmitteln der Vorrichtung 1 zum Aufhängen der tragbaren elektronischen Geräte elektrisch verbindbar sind, wobei in das Teil 2 zum Tragen des elektronischen Gerätes als Mittel zur Übertragung elektrischer Energie ein Band aus elektrisch leitendem Gewebe integriert bzw. eingebettet ist, welches mit den elektrischen Kontaktmitteln verbunden ist.

Bei dem in Figur 1 gezeigten Beispiel ist das Teil 2 zum Tragen des elektronischen Gerätes als Tragegurt ausgeführt. Gemäß der Erfindung ist das elektronische Gerät mit dem Tragegurt elektrisch direkt verbindbar oder es ist mit einer Tasche zum Unterbringen des Gerätes elektrisch verbindbar, die wiederum mit dem Tragegurt elektrisch verbindbar ist.

Die in Figur 1 gezeigte Vorrichtung 1 zum Aufhängen der tragbaren elektronischen Geräte umfasst mindestens einen mit einer Stromschiene 3 verbundenen Haken 4, der elektrische Kontaktmittel aufweist. Die elektrischen Kontaktmittel der Haken 4 und des Teils 2 zum Tragen des elektronischen Gerätes sind derart ausgeführt, dass beim Aufhängen des elektronischen Gerätes an einen der Haken 4 eine elektrische Verbindung zwischen den Kontaktmitteln des Teils 2 zum Tragen des elektronischen Gerätes und des Hakens 4 der Vorrichtung 1 zum Aufhängen der tragbaren elektronischen Geräte durch Formschluss entsteht. Auf diese Weise kann das elektronische Gerät aufgeladen werden, wenn die Vorrichtung 1 zum Aufhängen der tragbaren elektronischen Geräte mit einer Stromquelle verbunden ist.

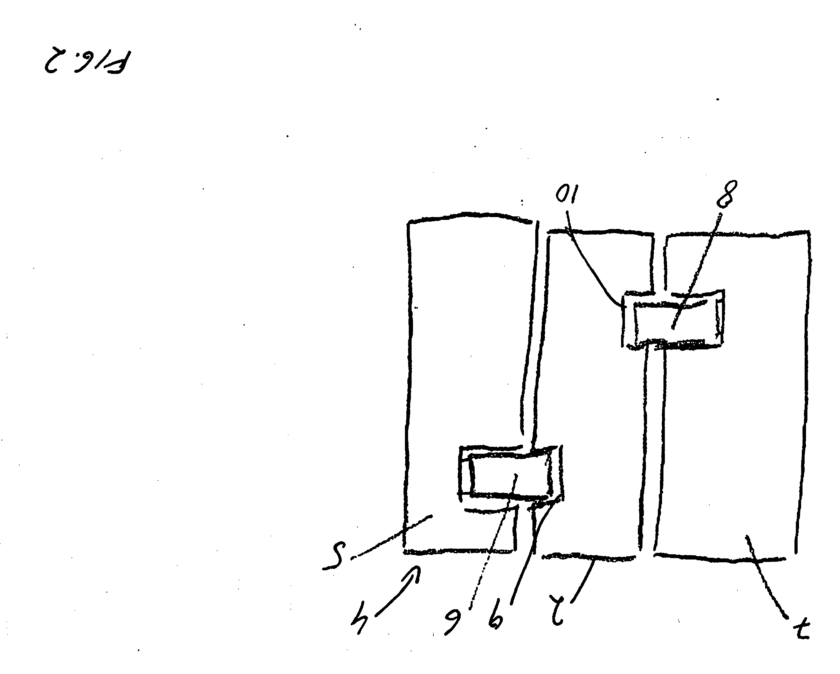

Bei dem in Figur 1 gezeigten Beispiel ist der Haken 4 als Verschlusshaken ausgeführt. Bezugnehmend auf Figur 2 ist am unteren Teil 5 des Verschlusshakens 4 die Plus-Kontaktstelle 6 und am oberen Teil 7 des Verschlusshakens 4 die Minus-Kontaktstelle 8 vorgesehen. Diese Kontaktstellen werden durch Aufhängen des Gerätes an den Verschlusshaken 4 mit entsprechenden Kontaktstellen 9, 10 am Teil 2 zum Tragen des elektronischen Gerätes elektrisch verbunden, so dass das Gerät aufgeladen werden kann.

Für den Fall, dass der Haken als einfacher Haken ausgeführt ist, sind die Kontaktstellen an derselben Seite des Teils 2 zum Tragen des elektronischen Gerätes vorgesehen, um die Herstellung einer elektrischen Verbindung mit den am Haken vorgesehenen Kontaktstellen zu ermöglichen. Die Stabilität der elektrischen Verbindung zwischen den Kontaktmitteln des Hakens und des Teils zum Tragen des elektronischen Gerätes wird durch das Gewicht des elektronischen Gerätes gewährleistet.

## Patentansprüche

1. System zum Aufladen von tragbaren elektronischen Geräten, umfassend eine mit einer Stromquelle elektrisch verbindbare Vorrichtung (1) zum Aufhängen der tragbaren elektronischen Geräte und ein Teil (2) zum Tragen des elektronischen Gerätes, welches Mittel zur Übertragung elektrischer Energie aufweist, die mit dem elektronischen Gerät elektrisch verbindbar sind, wobei das Teil (2) zum Tragen des elektronischen Gerätes mit den Mitteln zur Übertragung elektrischer Energie verbundene elektrische Kontaktmittel (9, 10) aufweist, welche durch Aufhängen des elektronischen Gerätes mittels des Teils (2) zum Tragen des elektronischen Gerätes an der Vorrichtung (1) zum Aufhängen der tragbaren elektronischen Geräte mit elektrischen Kontaktmitteln (6, 8) der Vorrichtung (1) zum Aufhängen der tragbaren elektronischen Geräte lösbar elektrisch verbindbar sind, wobei das Teil (2) zum Tragen des elektronischen Gerätes als Tragegurt oder Tragegürtel ausgeführt ist, wobei das elektronische Gerät mit den Mitteln zur Übertragung elektrischer Energie direkt verbindbar ist oder mit einer Tasche bzw. mit einer Hülle zum Unterbringen des Gerätes elektrisch verbindbar ist, die mit den Mitteln zur Übertragung elektrischer Energie elektrisch verbindbar ist oder wobei das Teil (2) zum Tragen des elektronischen Gerätes als Kleidungsstück ausgeführt ist, wobei das elektronische Gerät mit im Kleidungsstück vorgesehenen Mitteln zur Übertragung elektrischer Energie elektrisch direkt verbindbar ist **dadurch gekennzeichnet, dass** die Vorrichtung (1) zum Aufhängen der tragbaren elektronischen Geräte mindestens einen mit einer Stromschiene (3) verbundenen Haken (4) umfasst, der die elektrischen Kontaktmittel (6, 8) aufweist.

2. System zum Aufladen von tragbaren elektronischen Geräten nach Anspruch 1, **dadurch gekennzeichnet, dass** die elektrischen Kontaktmittel (6, 8) der Vorrichtung (1) zum Aufhängen der tragbaren elektronischen Geräte und (9, 10) des Teils (2) zum Tragen des elektronischen Gerätes derart ausgeführt sind, dass beim Aufhängen des elektronischen Gerätes eine elektrische Verbindung zwischen den Kontaktmitteln (9, 10) des Teils (2) zum Tragen des elektronischen Gerätes und den Kontaktmitteln (6,8) der Vorrichtung (1) zum Aufhängen der tragbaren elektronischen Geräte durch Formschluss entsteht.

3. System zum Aufladen von tragbaren elektronischen Geräten nach Anspruch 1 oder 2, **dadurch gekennzeichnet, dass** in das Teil (2) zum Tragen des elektronischen Gerätes als Mittel zur Übertragung elektrischer Energie ein Band aus elektrisch leitendem Gewebe oder ein Kabel integriert bzw. eingebettet sind.

4. System zum Aufladen von tragbaren elektronischen Geräten nach Anspruch 1, 2 oder 3, **dadurch gekennzeichnet, dass** in das Teil (2) zum Tragen des elektronischen Gerätes elektrische Energiespeicher integriert sind, die mit den Mitteln zur Übertragung elektrischer Energie verbunden sind.

5. System zum Aufladen von tragbaren elektronischen Geräten nach einem der vorangehenden Ansprüche, **dadurch gekennzeichnet, dass** der Haken (4) als Verschlusshaken ausgeführt ist.

6. System zum Aufladen von tragbaren elektronischen Geräten nach einem der vorangehenden Ansprüche, **dadurch gekennzeichnet, dass** das Teil (2) zum Tragen des elektronischen Gerätes Mittel zur digitalen Datenübertragung aufweist, die mit dem elektronischen Gerät zum Zweck der Datenübertragung verbindbar sind, wobei das Teil (2) zum Tragen des elektronischen Gerätes mit den Mitteln zur digitalen Datenübertragung verbundene Kontaktmittel aufweist, die durch Aufhängen des elektronischen Gerätes mittels des Teils (2) zum Tragen des elektronischen Gerätes an der Vorrichtung (1) zum Aufhängen der tragbaren elektronischen Geräte mit Kontaktmitteln zur digitalen Datenübertragung der Vorrichtung (1) zum Aufhängen der tragbaren elektronischen Geräte lösbar verbindbar sind, so dass eine Datensynchronisierung bzw. eine Datenübertragung vom elektronischen Gerät zu einem mit der Vorrichtung (1) zum Aufhängen der tragbaren elektronischen Geräte verbundenen weiteren elektronischen Gerät und umgekehrt ermöglicht wird.

7. System zum Aufladen von tragbaren elektronischen Geräten nach Anspruch 6, **dadurch gekennzeichnet, dass** die Kontaktmittel (6, 8) der Vorrichtung (1) zum Aufhängen der tragbaren elektronischen Geräte und (9, 10) des Teils (2) zum Tragen des elektronischen Gerätes auch als Kontaktmittel zur digitalen Datenübertragung dienen, wobei die im Teil (2) zum Tragen des elektrischen Gerätes vorgesehenen Mittel zur Übertragung elektrischer Energie auch der digitalen Datenübertragung dienen.

## Claims

1. A system for charging portable electronic devices, comprising an apparatus (1) electrically connectable with a power source for suspending the portable electronic devices and a part (2) for carrying the electronic device and comprising means for transmitting electric energy, which means are electrically connectable with the electronic device, wherein the part (2) for carrying the electronic device comprises electrical contact means (9, 10) connected with the means for transmitting electric energy, which, through suspending the electronic device by means of the part (2) for carrying the electronic device on the apparatus (1) for suspending the portable electronic devices, can be electrically detachably connected with electrical contact means (6, 8) of the apparatus (1) for suspending the portable electronic devices, wherein the part (2) for carrying the electronic device is implemented as a carrying strap or carrying belt, wherein the electronic device is directly connectable with the means for transmitting electric energy or is electrically connectable with a bag or a case for housing the device, which bag is electrically connectable with the means for transmitting electric energy or wherein the part (2) for carrying the electronic device is implemented as a garment, wherein the electronic device is directly electrically connectable with means provided in the garment for transmitting electric energy, **characterised in that** the apparatus (1) for suspending the portable electronic devices includes at least one hook (4) connected with a power rail (3) and comprising the electrical contact means (6, 8).

2. The system for charging portable electronic devices according to claim 1, **characterised in that** the electrical contact means (6, 8) of the apparatus (1) for suspending the portable electronic devices and (9, 10) the part (2) for carrying the electronic device are implemented in such a way that when the electronic device is suspended, an electrical connection is created through a form fit between the contact means (9, 10) of the part (2) for carrying the electronic device and the contact means (6, 8) of the apparatus (1) for suspending the portable electronic devices.

3. The system for charging portable electronic devices according to claim 1 or 2, **characterised in that** a tape made of electrically conducting fabric or a cable is integrated with, or embedded in, the part (2) for carrying the electronic device as a means for transmitting electric energy.

4. The system for charging portable electronic devices according to claim 1, 2 or 3, **characterised in that** electrical energy stores are integrated with the part (2) for carrying the electronic device, the energy stores being connected with the means for transmitting electric energy.

5. The system for charging portable electronic devices according to one of the preceding claims, **characterised in that** the hook (4) is implemented as a locking hook.

6. The system for charging portable electronic devices according to one of the preceding claims, **characterised in that** the part (2) for carrying the electronic device comprises means for digital data transmission which are connectable with the electronic device for the purpose of data transmission, wherein the part (2) for carrying the electronic device comprises contact means connected with the means for digital data transmission, which means, through suspending the electronic device by means of the part (2) for carrying the electronic device on the apparatus (1) for suspending the portable electronic devices are detachably connectable with contact means for digital data transmission of the apparatus (1) for suspending the portable electronic devices, so that it is possible to synchronise or transmit data from the electronic device to a further electronic device connected with the apparatus (1) for suspending the portable electronic devices, and vice versa.

7. The system for charging portable electronic devices according to claim 6, **characterised in that** the contact means (6, 8) of the apparatus (1) for suspending the portable electronic devices and (9, 10) the part (2) for carrying the electronic device are also used as contact means for digital data transmission, wherein the means for transmitting electric energy and provided in the part (2) for carrying the electronic device, are also used for digital data transmission.

## Revendications

1. Système pour recharger des appareils électroniques portatifs, comprenant un dispositif (1) pour suspendre les appareils électroniques portatifs pouvant être connecté électriquement à une source de courant et une partie (2) pour porter l'appareil électronique portatif, qui comprend des moyens pour la transmission d'énergie électrique, lesquels peuvent être connectés électriquement à l'appareil électronique, moyennant quoi la partie (2) pour porter l'appareil électronique présente des moyens de contact (9, 10) connectés électriquement aux moyens pour la transmission d'énergie électrique lesquels, en suspendant l'appareil électronique à l'aide de la partie (2) pour porter l'appareil électronique au dispositif (1) pour suspendre les appareil électroniques portatifs, peuvent être connectés électriquement de manière détachable à des moyens de contact électriques (6, 8) du dispositif (1) pour suspendre les appareil électroniques portatifs, moyennant quoi la partie (2) pour porter l'appareil électronique est réalisée en tant que sangle de transport ou ceinture de transport, moyennant quoi l'appareil électronique peut être connecté directement aux moyens pour la transmission d'énergie électrique ou bien peut être connecté à une poche ou un étui pour loger l'appareil, laquelle ou lequel peut être connecté(e) électriquement aux moyens pour la transmission d'énergie électrique, ou bien la partie (2) pour porter l'appareil électronique étant réalisée en tant que vêtement, moyennant quoi l'appareil électronique peut être directement connecté électriquement à des moyens pour la transmission d'énergie électrique prévus dans le vêtement, **caractérisé en ce que** le dispositif (1) pour suspendre les appareils électroniques portatifs comprend au moins un crochet (4) relié à une barre conductrice (3), lequel présente les moyens de contact électrique (6, 8).

2. Système pour recharger des appareils électroniques portatifs selon la revendication 1, **caractérisé en ce que** les moyens de contact électrique (6, 8) du dispositif (1) pour suspendre les appareils électroniques portatifs (9, 10) de la partie (2) pour porter l'appareil électronique sont réalisés de manière à ce que, en suspendant l'appareil électronique, une connexion électrique est établie grâce à une fermeture géométrique entre les moyens de contact (9, 10) de la partie (2) pour porter l'appareil électronique et les moyens de contact (6, 8) du dispositif (1) pour suspendre les appareils électroniques portatifs.

3. Système pour recharger des appareils électroniques portatifs selon les revendications 1 ou 2, **caractérisé en ce que** l'on intègre ou encastre dans la partie (2) pour porter l'appareil électronique, en guise de moyen pour la transmission d'énergie électrique, un ruban en tissu électro-conducteur ou un câble.

4. Système pour recharger des appareils électroniques portatifs selon les revendications 1, 2 ou 3, **caractérisé en ce que** des accumulateurs d'énergie électrique sont intégrés dans la partie (2) pour porter l'appareil électronique, lesquels sont connectés aux moyens pour la transmission d'énergie électrique.

5. Système pour recharger des appareils électroniques portatifs selon l'une des revendications précédentes, **caractérisé en ce que** le crochet (4) est réalisé en tant que crochet de fermeture.

6. Système pour recharger des appareils électroniques portatifs selon l'une des revendications précédentes, **caractérisé en ce que** la partie (2) pour porter l'appareil électronique présente des moyens pour la transmission de données numérique, lesquels peuvent être connectés à l'appareil électronique pour les besoins de transmission de données, moyennant quoi la partie (2) pour porter l'appareil électronique présente des moyens de contact connectés aux moyens pour la transmission de données numérique, lesquels peuvent être connectés de manière détachable, en suspendant l'appareil électronique à l'aide de la partie (2) pour porter l'appareil électronique au dispositif (1) pour suspendre les appareils électroniques portatifs, à des moyens de contact pour la transmission de données numérique du dispositif (1) pour suspendre les appareils électroniques portatifs, de manière à permettre une synchronisation de données ou une transmission de données de l'appareil électronique vers un autre appareil électronique connecté au dispositif (1) pour suspendre les appareils électroniques portatifs, et vice-versa.

7. Système pour recharger des appareils électroniques portatifs selon la revendication 6, **caractérisé en ce que** les moyens de contact (6, 8) du dispositif (1) pour suspendre les appareils électroniques portatifs (9, 10) de la partie (2) pour porter l'appareil électronique servent également de moyens de contact pour la transmission de données numérique, moyennant quoi les moyens pour la transmission d'énergie électrique prévus dans la partie (2) pour porter l'appareil électrique servent également à la transmission de données numérique.
